# DEMANDE DE BREVET EUROPEEN

(11) **EP 4 016 420 A1**
(43) Date de publication de la demande: **22.06.2022**
(21) Numéro de dépôt: 20306575.0
(22) Date de dépôt: 15.12.2020
(51) Int. Cl.: G06Q 10/08

(54) **PROCÉDÉ DE PILOTAGE AUTOMATIQUE D'UNE COMMANDE AU SEIN D'UNE PLATEFORME DE DISTRIBUTION**

(71) Demandeur: Société Coopérative Groupements d'Achats des Centres Leclerc, 94200 Ivry Sur Seine (FR)
(72) Inventeur: MAILFERT, Thierry, 06570 SAINT-PAUL-DE-VENCE (FR)
(74) Mandataire: Gauchet, Fabien Roland

(57) **Abrégé**

Le procédé de pilotage automatique d'une commande réalisée au sein d'une plateforme de distribution, notamment de produits domestiques, comprenant un entrepôt, un premier moyen d'identification d'un client venant retirer une commande préalablement passée auprès de la plateforme de distribution, au moins une piste de livraison de commandes, l'entrepôt comprenant au moins une section de préparation commande parmi une section ambiant, une section Fruits & Légumes, une section frais et une section surgelés, un espace de stockage tampon de commandes préparées associé comportant une entrée reliée à la au moins une section de préparation commande, la au moins une piste de livraison étant reliée à une sortie de l'espace de stockage tampon, et un système automatisé de cheminement de commandes depuis la au moins une section de préparation et la au moins une piste de livraison, le système automatisé de cheminement étant connecté au premier moyen d'identification d'un client, le procédé de pilotage comporte des étapes de :
a. Préparation de la commande préalablement passée auprès de la plateforme de distribution ;
b. Stockage de la commande préalablement passée ainsi préparée dans l'espace de stockage tampon ;
c. Identification du client venant retirer la commande préalablement passée via le premier moyen d'identification ;
d. Déstockage depuis l'espace de stockage tampon de la commande associée au client préalablement identifié ;
e. Redirection de la commande associée ainsi déstockée vers la au moins une piste de livraison.

## Description

### DOMAINE TECHNIQUE DE L'INVENTION

L'invention concerne un procédé de pilotage automatique d'une commande réalisée au sein d'une plateforme de distribution, notamment de produits domestiques, du type comprenant un entrepôt, un moyen d'identification d'un client venant retirer une commande et au moins une piste de livraison de ladite commande, ainsi qu'un système automatisé de cheminement de commandes.

### ETAT DE LA TECHNIQUE ANTERIEURE

Actuellement, les commandes à distance, effectuées, par exemple, via Internet, sur un site associé à une plateforme de distribution sont réalisées par des employés de la plateforme de distribution qui est aussi un supermarché dans lequel les clients déambulent. De ce fait, les employés réalisant les commandes destinées à être livrées aux clients, ayant passé leur commande au préalablement sur le site associé, sont obligés de parcourir les rayons du supermarché au milieu du chaland. Une première solution est de réaliser une plateforme de distribution comprenant un entrepôt entièrement dédié à cette réalisation de commandes à distance et n'acceptant pas le chaland à la différence d'un supermarché. Ainsi, une commande placée préalablement sur le site d'une telle plateforme de distribution par un client, est réalisée par l'employé à travers les rayonnages de l'entrepôt sans être perturbé par la présence du chaland, afin de délivrer ensuite ladite commande au client venant la récupérer sur une piste de livraison de ladite commande.

Par exemple, les documents FR 2 803 072 ou FR 2 802 789 décrivent une telle plateforme de distribution, notamment de produits domestiques, ainsi qu'un procédé associé au fonctionnement de cette plateforme. Toutefois, ce document ne décrit nullement de quelle manière est réalisée, au sein de l'entrepôt, la commande, entre le moment où elle est réceptionnée sur le site dédié à la plateforme et le moment où elle est distribuée sur la piste de livraison au client venant la chercher. Toutefois, il fort probable que la commande soit réalisée par un employé déambulant le long des différents rayonnages de l'entrepôt afin de rassembler les produits commandés par le client avant sa livraison sur la piste de livraison. Un tel système n'est pas optimisé de manière à permettre une livraison rapide entre le moment où le client est identifié à l'entrée de la plateforme et le moment où il vient prendre livraison de sa commande sur la piste de livraison. En particulier, cela devient problématique lorsque l'affluence est très forte auprès de la plateforme de distribution.

### EXPOSE DE L'INVENTION

Un but de l'invention est de fournir un procédé de pilotage automatique d'une commande au sein d'une plateforme de distribution qui soit optimisé de sorte à réduire le temps d'attente entre l'identification à l'entrée de l'accès à la plateforme du client venant rechercher une commande et sa livraison sur une des pistes de livraison de la plateforme.

A cette fin, il est prévu, selon l'invention, un procédé de pilotage automatique d'une commande réalisée au sein d'une plateforme de distribution, notamment de produits domestiques, comprenant un entrepôt, un premier moyen d'identification d'un client venant retirer une commande préalablement passée auprès de la plateforme de distribution, au moins une piste de livraison de commandes, l'entrepôt comprenant au moins une section de préparation commande parmi une section ambiant, une section Fruits & Légumes, une section frais et une section surgelés, un espace de stockage tampon de commandes préparées associé comportant une entrée reliée à la au moins une section de préparation commande, la au moins une piste de livraison étant reliée à une sortie de l'espace de stockage tampon, et un système automatisé de cheminement de commandes depuis la au moins une section de préparation et la au moins une piste de livraison, le système automatisé de cheminement étant connecté au premier moyen d'identification d'un client, le procédé de pilotage comportant des étapes de :
a) Préparation de la commande préalablement passée auprès de la plateforme de distribution ;
b) Stockage de la commande préalablement passée ainsi préparée dans l'espace de stockage tampon ;
c) Identification du client venant retirer la commande préalablement passée via le premier moyen d'identification ;
d) Déstockage depuis l'espace de stockage tampon de la commande associée au client préalablement identifié ;
e) Redirection de la commande associée ainsi déstockée vers la au moins une piste de livraison.

Avantageusement, mais facultativement, le procédé de pilotage automatique selon l'invention présente ou comporte au moins l'une des caractéristiques techniques suivantes :
- préalablement à l'étape e., le procédé de pilotage automatique comporte une étape d'identification du client venant retirer la commande préalablement passée via un deuxième moyen d'identification prévu sur la au moins une piste de livraison ;
- lors de l'étape a., le procédé de pilotage automatique comporte des sous étapes de :
   ∘ a1. Ventilation de la commande préalablement passée en une série de sous-commandes par type de produits contenu dans ladite commande préalablement passée ;
   ∘ a2. Préparation de la série de sous commandes ainsi ventilé ; et,
   ∘ a3. Envoi de la série de sous commandes ainsi préparée pour stockage ;
- lors de l'étape a2., le procédé de pilotage automatique comprend des sous-étapes de :
   ∘ a21. Assemblage d'une série de sous commandes ;
   ∘ a22. Ramassage en vrac de la série de sous commandes ainsi assemblées ;
   ∘ a23. Ventilation de la série de sous commandes ainsi ramasser en chacune des sous commandes de la série de sous commandes.
   ∘ Procédé de pilotage automatique selon la revendication 1 à 4, dans lequel, lors de l'étape b., le procédé de pilotage automatique comporte une étape de détermination d'un emplacement de stockage au sein de l'espace de stockage tampon ;
- la détermination de l'emplacement de stockage est optimisée fonction d'une distance entre une entrée de l'espace de stockage tampon considéré et un emplacement de stockage possible et d'une distance entre l'emplacement de stockage possible et une sortie de l'espace de stockage tampon considéré ;
- l'identification du client est réalisée par la lecture d'une carte, d'un code barre ou QR code ; et,
- le déstockage depuis l'espace de stockage tampon de l'étape d s'effectue vers une boucle d'attente, la redirection de l'étape e s'effectuant depuis la boucle d'attente.

Il est aussi prévu selon l'invention, un système automatisé de cheminement de commandes agencé de sorte à mettre en oeuvre le procédé selon l'invention présentant au moins l'une des caractéristiques techniques précédentes.

### BREVE DESCRIPTION DES FIGURES

D'autres caractéristiques et avantages de l'invention ressortiront à la lecture de la description qui suit d'un mode de réalisation privilégié en référence aux figures annexées qui illustrent :
- la figure 1 est un plan schématique illustrant une plateforme de distribution agencé de sorte à mettre en œuvre le procédé de pilotage automatique selon l'invention ;
- la figure 2 est une vue schématique illustrant un agencement permettant la réalisation de commandes passées au sein d'une section de l'entrepôt de la plateforme de distribution de la figure 1 et mise en œuvre au sein du procédé de pilotage selon l'invention ;
- la figure 3 est un plan schématique d'un espace de stockage tampon de la plateforme de distribution agencé de sorte à mettre en œuvre une partie du procédé de pilotage selon l'invention ;
- la figure 4 est un plan schématique d'un espace de stockage tampon selon une variante de réalisation pour la plateforme de distribution de la figure 1 et apte à mettre en œuvre une partie du procédé de pilotage automatique selon l'invention ;
- la figure 5 est un organigramme illustrant un procédé de réalisation d'une commande passée par un client jusqu'à son stockage, procédé de réalisation faisant partie du procédé de pilotage automatique selon l'invention ; et
- la figure 6 est un organigramme illustrant un procédé de livraison d'une commande préalablement passée par un client venant retirer sa commande auprès de la plateforme de distribution selon la revendication 1, procédé de livraison faisant partie du procédé de pilotage automatique selon l'invention.

Pour plus de clarté, les éléments identiques ou similaires sont repérés par des signes de référence identiques sur l'ensemble des figures.

### DESCRIPTION DETAILLEE D'UN MODE DE REALISATION

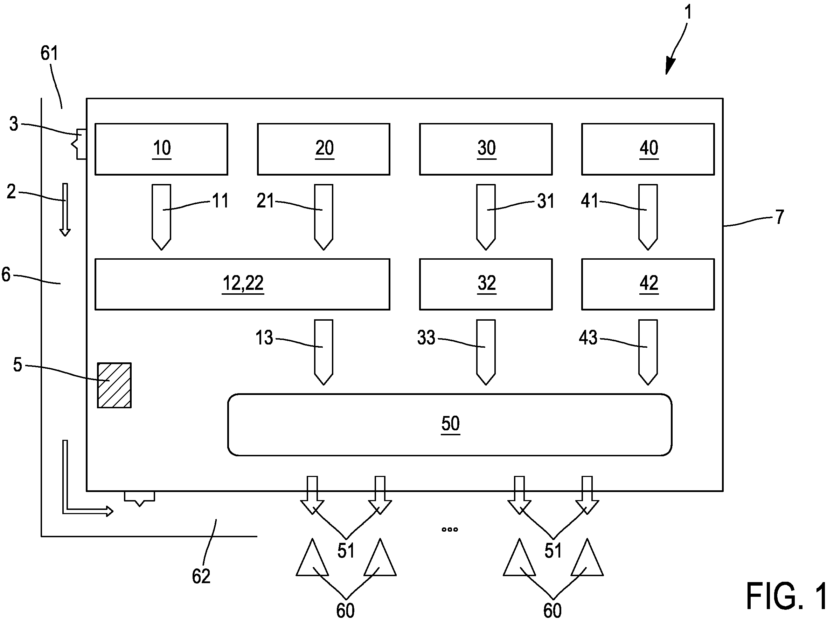

En référence à la figure 1, nous allons décrire un agencement schématique d'une plateforme de distribution 1 selon l'invention. La plateforme de distribution 1 selon l'invention comporte un entrepôt 7. L'entrepôt 7 comporte une ou plusieurs sections de préparation de commandes 10,20,30,40. Ce nombre de sections de préparation de commandes dépend du type de produits qui est destiné à être vendu au sein de la plateforme de distribution 1. Afin d'illustrer le propos concernant la plateforme de distribution 1 selon l'invention, nous utiliserons une plateforme de distribution de produits domestiques comme il est possible d'en trouver dans un supermarché. Typiquement, ce type de plateforme de distribution 1 comporte, dans l'entrepôt 7, quatre sections de préparation de commandes dont une section de préparation de commandes de produits ambiants 10, une section de préparation de commandes dite « fruits et légumes » 20, une section de préparation de commandes de produits frais 30 et une section de préparation de commandes de produits surgelés 40. Chacune des sections de préparation de commandes 10,20,30,40 comporte une zone d'entreposage des produits associés. Ainsi, nous décrirons ultérieurement des agencements possibles de ces sections de préparation de commandes. Une sortie d'une section de préparation de commandes 10,20,30,40 est reliée à une entrée d'un espace de stockage tampon 12,22,32,42 associé, à travers des premiers moyens de transport 11,21,31,41 de commandes associés. Comme pour les sections de préparation de la commande 10,20,30,40, les espaces de stockage tampon 12,22,32,42 sont dédiés aux types de produits destinés à y être entreposés entre le moment où la commande est préparée dans les sections de préparation de commandes 10,20,30,40 et son déstockage pour une livraison au client venant chercher ladite commande. De ce fait, les sections de préparation de commandes de produits ambiants 10 et de produits de type fruits et légumes 20 sont associées à un espace tampon ambiant 12,22. De même, la section de préparation de commande de produits frais 30 est connectée à un espace tampon de produits frais 32 associé. Il en est de même pour la section de préparation de commande de produits surgelés 40 associée à un espace tampon surgelé 42.

Ensuite, l'entrepôt 7 comprend, ici illustré, une boucle d'attente 50 dont des entrées sont reliées aux différents espaces de stockage tampons 12,22,32,42 via des deuxièmes moyens de transport 13,33,43. D'autre part, la boucle d'attente 50 comporte une série de sorties 51 associée à une série de pistes de livraison de commandes 60 qui sont situées à l'extérieur de l'entrepôt 7 et faisant partie de la plateforme de distribution 1 selon l'invention.

Il est à noter que, dans le cadre de l'invention, la boucle d'attente 50 est optionnelle et peut être remplacée par tout moyen permettant d'acheminer une commande préalablement déstockée depuis le ou les espaces de stockage tampons 12,22,32,42 à la série de pistes de livraison de commandes 60. Dans la suite de la description, la boucle d'attente 50 sera à considérer en prenant en compte la remarque précédente.

De plus, la plateforme de distribution 1 comprend une piste carrossable 6 comprenant une entrée 61 par lequel un client venant retirer une commande préalablement passée auprès de la plateforme de distribution 1 pénètre sur le site de la plateforme de distribution 1. Cette piste carrossable 6 présente un sens de circulation 2 depuis son entrée 61 vers une sortie 62 qui est juste en amont de la série de pistes de livraison 60. Cette piste carrossable 6 se poursuit ensuite en sortie des pistes de livraison 60 vers l'extérieur du site de la plateforme de distribution 1 de manière connue en soi. Ici, la plateforme de distribution 1 comporte, au niveau de l'entrée 61 de la piste carrossable 6, un premier moyen d'identification 3 qui permet d'identifier l'arrivée et l'entrée sur le site de la plateforme de distribution 1 d'un client venant retirer une commande préalablement passée sur le site associé à la plateforme de distribution 1. De plus, chacune des pistes de livraison 60 comporte un deuxième moyen d'identification du client venant retirer une commande préalablement passée auprès de la plateforme de distribution 1, de sorte à diriger la commande qu'il vient retirer, déstockée et mise ,ici, dans la boucle d'attente 50 comme expliqué ultérieurement, pour qu'elle soit livrée sur la bonne piste de livraison 60 au niveau de laquelle le client attend sa commande préalablement passée auprès du site de la plateforme de distribution 1.

Afin de gérer l'ensemble de la plateforme de distribution 1, cette dernière comporte un système automatisé de cheminement de commandes 5, au moins relié au premier moyen d'identification 3. Le système automatisé de cheminement de commandes 5 permet de gérer et de piloter le cheminement d'une commande préalablement passée auprès de la plateforme de distribution 1 et préparée dans l'une au moins des sections de préparation de commandes 10 ,20,30,40 depuis la sortie de ou des sections de préparation de commande 10,20,30,40 et la livraison de la commande sur une des pistes de livraison 60 au client préalablement identifié par le premier moyen d'identification 3 à son arrivée sur le site de la plateforme de distribution 1 au niveau de l'entrée 61 de la piste carrossable 6.

Nous allons maintenant décrire en détail les différents éléments de la plateforme de distribution 1.

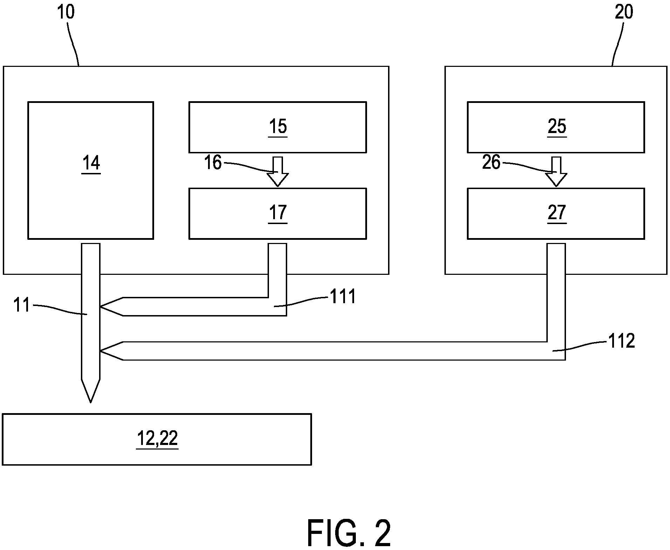

En référence à la figure 2, nous allons décrire en détail le principe et le fonctionnement d'une section de préparation de commandes 10,20,30,40. Dans le cas illustrant l'invention, la section de préparation de commande de produits ambiants 10 est, ici, séparée en deux zones. La première zone 14 concerne les produits de gros volume qui sont directement dispatchés selon les commandes préalablement passées sur le site de la plateforme de distribution 1 dans des bacs associés à chacune des commandes. Ces produits de gros volume sont donc directement stockés dans un ou plusieurs bacs comprenant chacun un identifiant unique puis posés directement dans les moyens de transport 11 vers l'entrepôt de stockage tampon associé aux produits ambiants 12. La deuxième zone 15, 16, 17 de la section de préparation de commandes de produits ambiants 10 est en deux parties. La première partie 15 forme une zone d'entreposage et de ramassage en vrac de plusieurs commandes en même temps, c'est-à-dire que dans un même bac, une série de commandes sont réalisées et ramassées, puis ces bacs comprenant une série de commandes en vrac sont déposés sur des moyens de cheminement 16 vers un ou plusieurs postes de préparation 17 dans lesquels les commandes ramassées en vrac sont dispatchées dans des bacs propres à chacune des commandes pour être ensuite positionnées, une fois la ventilation réalisée, sur des moyens de cheminement 111 reliés et connectés au moyen de cheminement 11 vers l'espace de stockage tampon 12 associé aux produits ambiants. Il est à noter que la section 10 de préparation de commandes de produits ambiants est maintenue à une température dite ambiante comprise entre +12 et +18°C environ.

Concernant la section de préparation de commande de produits fruits et légumes 20, la disposition est identique à la deuxième zone 15, 16, 17 de la section de préparation de commandes de produits ambiants 10 préalablement décrite en ce sens où elle comporte une première partie 25 de stockage et de ramassage des produits fruits et légumes en vrac et correspondant pour un même bac de ramassage à une série de commandes, bac mis ensuite sur un moyen de cheminement 26 vers un poste de préparation 27 dans lequel les différentes commandes sont réalisées dans leur propre bac, chacun des bacs comportant une commande associée étant ensuite disposée sur des moyen de cheminement cheminements 112 reliés aux moyens de cheminement 11 vers l'espace tampon de stockage 22 associé aux fruits et légumes. En variante, chacun des bacs comportant une commande associée est disposée sur les moyens de transport 21 vers l'espace tampon de stockage 22 associé aux fruits et légumes. Il est à noter que la section de préparation de commandes de fruits et légumes 20 est maintenue à une température de l'ordre de +12°C.

La section de préparation de commandes de produits frais 30 est agencée de la même manière que la section de préparation de commandes de produits fruits et légumes 20 préalablement décrite. Cette zone est maintenue à une température de l'ordre de +2 à +4°C. Une fois les commandes préparées, les bacs associés à chacune des commandes sont positionnés dans les moyens de transport 31 vers l'espace de stockage tampon associé 32.

Enfin, la section de préparation de commandes de produits surgelés 40 est agencée comme les sections de préparation de commandes de fruits et légumes 20 ou de produits frais 20 préalablement décrites. De nouveau, les commandes réparties dans des bacs associés à chacune des commandes préalablement passées sur le site sont disposées sur les moyens de transport 41 vers l'espace de stockage tampon associé 42. Cette section est maintenue à une température comprise entre -20 et -25°C.

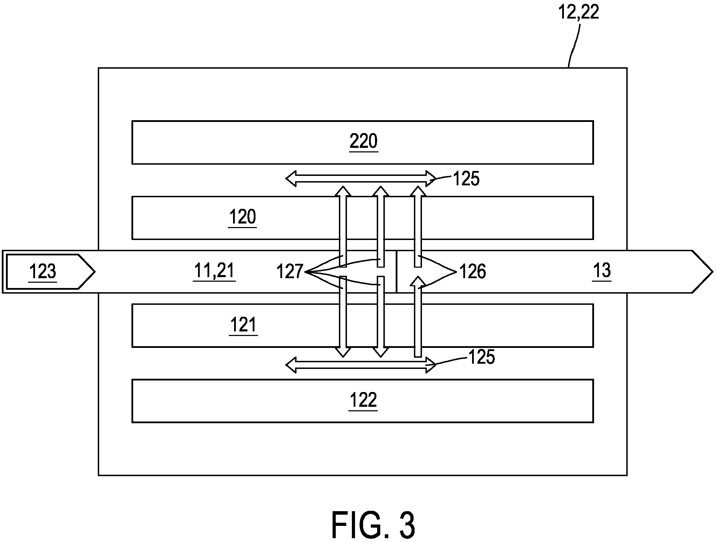

Maintenant, en référence à la figure 3, nous allons décrire plus en détail l'espace de stockage tampon de produits ambiants 12 et de fruits et légumes 22. Les bacs comportant tout ou partie des commandes préalablement préparées dans les sections de préparation de commandes de produits ambiants 10 et de produits fruits et légumes 20, pénètrent par une entrée 123 dans l'espace de stockage tampon 12,22. Ici, l'espace de stockage tampon 12,22 comporte trois rangées de stockage de bacs 120,121,122, ici destinées et dédiées aux produits ambiants issus de la section de préparation de commande de produits ambiants 10 et une rangée de stockage de bacs 220 dédiée et réservée aux bacs de commandes issus de la section de préparation de commande de produits fruits et légumes 20. Les rangées de stockage de bacs 120,121,122,220 sont, ici, associées deux à deux en regard l'une de l'autre de manière linéaire. Par exemple, comme illustré, la rangée de stockage de bacs 120 et la rangée de stockage de bacs 220 se font face à face et sont séparées par un espace dans lequel circule une navette 125. De manière similaire, la rangée de stockage de bacs 121 et la rangée de stockage de bacs 122 sont arrangées en regard l'une de l'autre de manière linéaire et entre lesquelles circule une navette 125 similaire à la précédente navette 125. Les navettes 125 se déplacent linéairement le long et sur toute la longueur des rangées de stockage de bacs 120,121,122 et 220. Une fois les bacs introduits par l'entrée 123 dans l'espace de stockage 12,22, ces derniers sont acheminés vers une série d'échangeurs 127 qui permettent en fonction de l'identification des bacs d'envoyer ces derniers vers l'une des deux navettes 125, cette dernière assurant le stockage à un endroit prédéterminé par le système automatisé de cheminement 5 du bac ainsi pris en charge. De même, lors d'un déstockage, le système automatisé de cheminement 5 envoie une information à l'une des deux navettes 125 pour aller chercher un bac dans l'une des rangées de stockage de bacs 120,121,122 et 220 et de l'amener vers un échangeur de sortie 126 qui dépose les bacs sur les moyens de transport 13 qui amènent alors les bacs ainsi déstockés via l'échangeur 126 vers la boucle d'attente 50 ou tout autre moyen d'acheminement comme indiqué précédemment. En variante de réalisation, les différentes rangées de stockage de bacs 220,120,121 et 122 peuvent être aménagées sur plusieurs étages de sorte à multiplier les espaces de stockages, une navette 125 associée à un échangeur 127 étant prévue à chacun des étages de sorte à atteindre les différents étages de chacune des rangées.

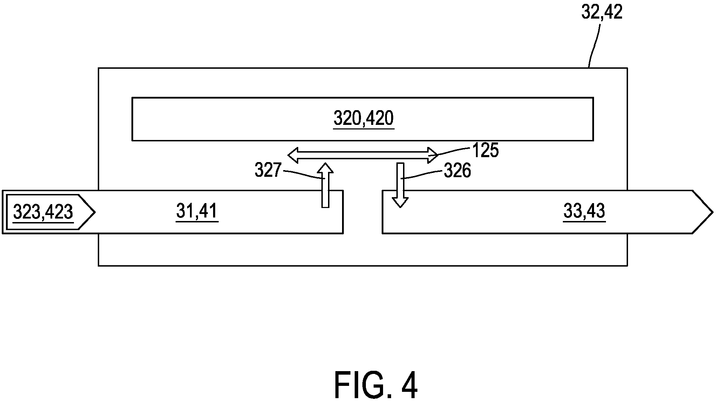

En référence à la figure 4, nous allons décrire une version « allégée » de la structure d'un espace de stockage tampon, ici dédié d'une part aux produits frais 32 et aux produits surgelés 42. De manière similaire à ce qui a été décrit précédemment en regard de l'espace de stockage tampon 12,22 des produits ambiants et des produits fruits et légumes, l'espace de stockage 32,42, comporte une seule rangée 320,420 le long de laquelle une navette 125 se déplace le long. Comme précédemment, une fois le bac de commandes préparé dans la section de préparation de commande de produits frais 30 ou de produits surgelés 40 pénètre via une entrée 323,423 de l'espace de stockage tampon associé 32,42, un premier échangeur 327 permet de positionner le bac sur la navette 125 qui va alors le ranger à un emplacement de la rangée de stockage de bacs 320,420 prédéterminé par le système automatisé 5 de la plateforme de distribution 1. De même, lors d'un déstockage, la navette 125 va chercher le bac identifié et le ramène à un échangeur de sortie 326 qui dépose alors le bac ainsi déstocké sur les moyens de transport 33,43 amenant alors le bac dans la boucle d'attente 50. En variante de réalisation, et en particulier, pour l'espace de stockage tampon 42 de produits surgelés, la rangée 420 est de forme circulaire, la navette 125 étant alors un bras articulé, robotisé situé au centre d'un cercle imaginaire que forme les étagères de la rangée circulaire 420.

Maintenant, nous allons décrire plus en détail le procédé associé au fonctionnement de la plateforme de distribution 1 précédemment décrite.

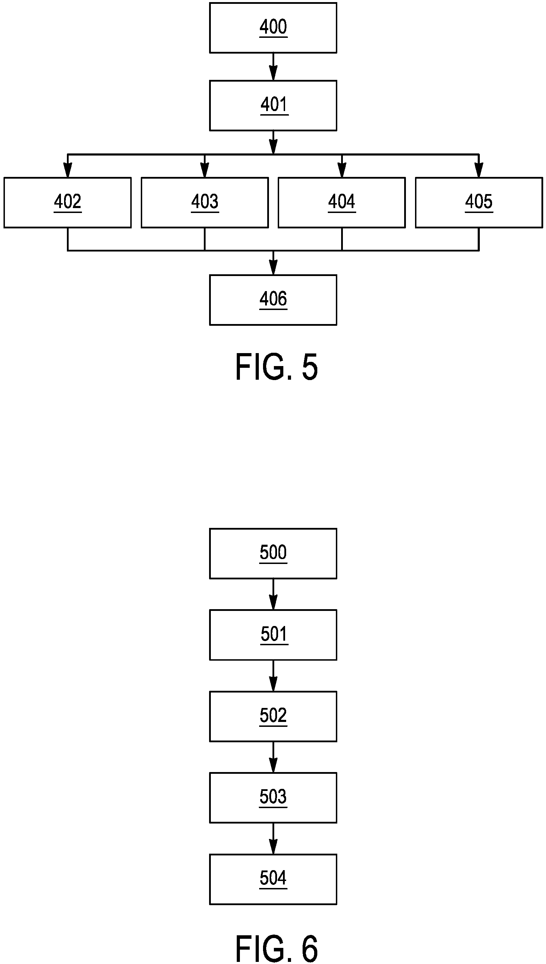

En référence aux figures 5 et 6, nous allons décrire plus en détail un procédé de pilotage automatique d'une commande réalisée au sein de la plateforme de distribution 1 telle que précédemment décrite et mise en œuvre en particulier par le système automatisé de cheminement de commandes 5 de la plateforme de distribution 1.

Dans un premier temps, un client de la plateforme de distribution 1 passe une commande sur le site associé à la plateforme de distribution 1. En retour, le client reçoit un numéro de commande et une heure de retrait pour laquelle la plateforme de distribution peut assurer que sa commande sera prête à être livrée.

Dans une première étape 400, le procédé de pilotage automatique d'une commande enregistre la commande passée sur le site puis réalise en fonction du contenu de la commande une ventilation de la commande, dans une étape 401 ,en fonction des produits commandés, c'est-à-dire qu'il envoie la partie de commande concernant les produits ambiants vers la section de préparation de commandes de produits ambiants 10, de fruits et légumes vers la section de préparation de commandes fruits et légumes 20, s'il y a des produits frais, d'envoyer la partie de commande les concernant vers la section de préparation de commandes de produits frais 30 et finalement, s'il y a des produits surgelés, vers la section de préparation de commandes des produits surgelés 40. En parallèle, généralement, le procédé de pilotage automatique pilote la préparation des commandes dans des étapes 402,403,404,405 dans les différentes sections de préparation de commandes 10,20,30,40 respectivement. En particulier, lors des étapes 402,403,404,405, un ramassage global en vrac est réalisé par groupes de commandes préalablement rassemblées par le procédé de pilotage automatique d'une commande, une ventilation du ramassage en vrac est réalisée dans les différentes commandes du groupe de commandes préalablement rassemblées, dans les sections de préparation de commandes de produits ambiants petit volume 15, fruits et légumes 20, produits frais 30 et produits surgelés 40. Concernant les ramassages en vrac par groupe de commandes ou série de commandes dans un seul bac, le procédé de pilotage automatique d'une commande dirige le bac de ramassage en vrac vers un poste de préparation 17,27 dans lequel le contenu des bacs de ramassage en vrac est ventilé dans des bacs propres aux différentes commandes préalablement rassemblées pour le ramassage en vrac. Concernant le gros volume, le ramassage se fait commande par commande dans un bac dédié. A une commande associée, lors de l'étape 402. Ensuite, l'ensemble des bacs associés à une commande sont envoyés vers leurs espaces de stockage tampons 12,22,32,42 dédiés lors d'une étape 406.

En pratique et pour illustrer le fonctionnement, dans les différentes sections de préparation de commandes 10,20,30,40, les commande à préparer sont reçues par vague via le système automatisé de cheminement de commandes 5 de la plateforme de distribution 1 de sorte à permettre une ramasse globale dite en vrac comme décrite précédemment, c'est-à-dire que dans un même bac, un ensemble, par exemple de dix commandes, sont ramassées en même temps et mélangées au sein de ce bac. Ensuite, dans un second temps, ces bacs contenant le ramassage en vrac sont envoyés vers les différents postes de préparation 17,27 pour une phase de tri du bac de ramassage en vrac vers les bacs individualisés pour chacune des commandes associées au bac de ramassage en vrac. C'est à ce moment en particulier que l'identifiant du bac individualisé est associé à un numéro de commande avant de partir pour l'espace de stockage tampon associé. Cela permet d'optimiser les phases de préparation de commandes. Ainsi en moyenne, pour une commande répartie sur l'ensemble des types de produits, chacune des commandes préalablement passées sur le site de la plateforme de distribution 1 comporte cinq bacs associés, un bac comportant les produits ambiants gros volume, un bac comportant les produits ambiants petit volume, un bac comportant les produits fruits et légumes, un bac comportant les produits frais et un bac comportant les produits surgelés de la commande du client.

Une fois ces bacs ainsi préparés, envoyés dans leurs espaces de stockage tampons12,22,32,42 associés, le procédé de pilotage automatique détermine un emplacement de stockage des différents bacs dans les rangées 120,121,122,220,320,420 de l'espace de stockage tampon 12,22,32,42 associé au bac. Pour cela, au niveau de chacun des premiers moyens de transport de bacs 11,21,31,41, des moyens d'identification des bacs permettent de contrôler la présence et la cohérence du bac considéré. Si un problème de cohérence ou d'absence d'identification survient, alors le procédé de pilotage automatique stoppe le bac en cause qui est alors mis de côté. De même, dans le cas où il n'y a aucun emplacement dans l'espace de stockage tampon associé au bac identifié, le procédé de pilotage automatique via le système automatisé de cheminement de commande 5 stoppe l'avancement et le stockage des bacs dans ledit espace de stockage tampon associé jusqu'à ce qu'un emplacement dans la rangée associée à l'espace de stockage tampon soit libéré.

Afin d'optimiser l'occupation et l'utilisation des différents espaces de stockage tampon 12,22,32,42, le procédé de pilotage automatique calcule un emplacement optimal pour un bac donné dans l'espace de stockage tampon qui lui est associé. Concernant les espaces de stockage tampons 12,22,32,42, chaque emplacement de stockage d'un bac est pondéré par une durée de trajet que met la navette 125 pour atteindre d'une part l'emplacement de stockage, déstocker le bac et le ramener à l'échangeur de sortie 126,326 associé à l'espace de stockage tampon. Cette durée est déterminée en fonction de la proximité de ou des échangeurs d'entrée 127,327 du bac dans l'espace de stockage tampon associé considéré, entre la navette 125 et l'échangeur d'entrée 127,327, ainsi que de la hauteur ou plutôt du niveau au sein de la rangée de stockage 120,121,122,220,320,420. Cela permet de prendre en compte l'éloignement et donc le temps de transport entre les échangeurs d'entrée ou de sortie et l'emplacement calculé et déterminé par le procédé de pilotage automatique d'une commande.

Les différents bacs sont stockés dans un emplacement libre en fonction de la correspondance entre le type de produits qu'il contient et la zone de l'espace de stockage tampon où il doit être stocké, la proximité de l'heure de retrait théorique préalablement indiquée au client lors de passage de sa commande sur le site de la plateforme de distribution et enfin du nombre de bacs que comporte la commande. Car ceux-ci, selon leurs emplacements de stockage, pourront être retirés en parallèle ou l'un après l'autre. Concernant une configuration dans laquelle la rangée de stockage est de forme circulaire, comme privilégiée pour l'espace de stockage tampon de produits surgelés 42, les distances précédentes interviennent dans une moindre mesure dans le sens où, du fait de la répartition circulaire, les temps de transfert des bacs entre l'échangeur d'entrée ou l'échangeur de sortie et leur emplacement de stockage sont extrêmement courts.

Un bac associé à une commande entre donc sur les moyens de transport de l'espace de stockage tampon 12,22,32,42 qui lui est associé au niveau d'une entrée 123,223,323,423. Il est alors identifié par des moyens d'identification du bac avant d'arriver sur l'échangeur d'entrée 127,327. Si le bac considéré doit être stocké au même niveau que le premier échangeur d'entrée 127,327 rencontré, il est alors transféré vers la navette 125 qui, une fois disponible, le récupère et le transporte jusqu'à l'emplacement de stockage défini par le procédé de pilotage automatique selon l'invention. Si le bac ainsi identifié ne doit pas être stocké à ce premier niveau, il continue vers le deuxième échangeur d'entrée 127 situé à un deuxième niveau et de nouveau, l'opération se répète si le bac doit être rangé à ce niveau, sinon il continue vers un troisième puis un quatrième niveau, etc.., jusqu'à ce qu'il soit transféré sur la navette 125 associée au niveau pour rangement dans son emplacement prédéfini.

Si un bac est non identifié au niveau du dernier niveau possible de l'espace de stockage considéré, alors ce bac est évacué sur une boucle de tri. De même dans le cas d'un mauvais routage, le procédé de pilotage automatique selon l'invention recalcule un emplacement de stockage à partir du niveau où se trouve le bac ainsi identifié. Si le bac est dans le mauvais espace de stockage tampon, il est alors évacué, ici, sur la boucle d'attente 50. De même, si un bac considéré arrive au dernier niveau de la ligne et que plus aucun emplacement de stockage est disponible à ce niveau, une alerte est déclenchée par le procédé automatique de pilotage et le bac est alors évacué, ici, sur la boucle d'attente 50 et tournera en continu tant qu'une opération ne sera déclenchée par le superviseur du site concernant ce bac.

Concernant la livraison d'une commande ainsi préparée, le client se présente généralement à partir de l'heure qui lui a été indiquée lors du passage de sa commande sur le site à l'entrée 61 de la piste carrossable 6 et est identifié par le premier moyen d'identification 3. Cela déclenche alors un déstockage de l'ensemble des bacs formant sa commande par le système automatisé de cheminement de commandes 5 de la plateforme de distribution 1. Dès lors, les bacs associés à la commande sont déstockés des différents espaces de stockage tampons 12,22,32,42 sur la boucle d'attente 50 ou tout autre moyen d'acheminement idoine comme indiqué précédemment. Pendant ce temps, le client poursuit son cheminement le long de la piste carrossable 6 vers son extrémité 62 en amont des différentes pistes de livraison 60. Là, le client attend qu'une piste de livraison 60 se libère puis se stationne le long de cette piste de livraison 60 où un deuxième moyen d'identification l'identifie et envoie au système automatisé de cheminement d'une commande 5 l'ordre de dérouter les bacs associés à la commande du client ainsi réidentifié de la boucle d'attente 50, ou tout autre moyen d'acheminement idoine comme indiqué précédemment, sur la piste de livraison 60 le long de laquelle le client est stationné.

Si un client arrive avant l'heure de retrait théorique, alors le procédé de pilotage automatique de commande selon l'invention applique la logique suivante :
- S'il n'y a aucune commande de prête, il déclenche la livraison.
- S'il y a plus d'une commande de prête :
   ∘ S'il y a moins de X heures (temps paramétrable, généralement deux heures) entre l'horodate de retrait théorique de la première commande et l'horodate de retrait théorique d'une autre commande, alors le procédé automatique de commande déclenche la livraison de la première commande et de cette autre commande, et de toutes celles entre ces deux horodates de retrait théorique.
   ∘ S'il y a plus que X heures entre l'horodate de retrait théorique de la première commande et l'horodate de retrait théorique d'une autre commande, alors le procédé automatique de commande ne livre pas la deuxième ou l'autre commande.

En contrepartie, si un client arrive après les heures théoriques de livraison de ses commandes, le procédé automatique de commande selon l'invention déclenche la livraison de toutes les commandes qui lui sont associées. Il est à noter que, dans l'exemple illustré ici, les bacs à livrer sont déstockés depuis leur espace de stockage tampon associé vers la boucle d'attente 50, si cette dernière n'est pas saturée.

Pour résumer, le procédé de pilotage automatique d'une commande, lors de la livraison d'une commande, réalise une étape 500 d'identification du client via le premier moyen d'identification 3, ce qui engendre une deuxième étape 501 de déstockage de la commande des différents espaces de stockage tampons, puis la mise dans la boucle d'attente 50, ou tout autre moyen d'acheminement idoine comme indiqué précédemment, de la commande dans une étape 502, puis dans une étape 503, identification du client au niveau d'une des pistes de livraison 60, ce qui déclenche l'étape 506 de livraison de la commande ou des différents bacs de la commande depuis la boucle d'attente 50, ou tout autre moyen d'acheminement idoine comme indiqué précédemment, vers la piste de livraison 60 ainsi repérée.

Il est à noter que les pistes de livraison comportent un signal de couleur permettant d'indiquer si l'ensemble des bacs ont bien été livrés au client identifié sur ladite piste de livraison 60.

Un tel système et procédé associé de livraison d'une commande préalablement passée sur le site de la plateforme de distribution 1 tel précédemment décrit permet d'optimiser la préparation et la livraison des commandes au client.

Les différents moyens d'identification précités d'un client comportent soit un lecteur de carte (comme une carte de fidélité de la plateforme de distribution ou une carte bancaire ayant servi à valider la commande sur le site de la plateforme de distribution 1), soit un lecteur de code-barre ou de QR code permettant d'identifier par exemple le numéro de commande, ou bien le numéro associé à un client si celui-ci en possède un, ou bien encore tout autre moyen d'identification d'un client associé à son compte client ou à la commande lors du passage de la commande sur le site de la plateforme de distribution 1.

Il en ressort de ce qui précède qu'une telle organisation d'une plateforme de distribution ainsi que du procédé permettant de piloter une telle plateforme de distribution telle que précédemment décrite, permet d'optimiser la livraison des commandes préalablement passées sur le site de la plateforme de distribution, ainsi que de gérer la livraison de ces commandes lors de fortes affluences sur le site de la plateforme de distribution 1.

Bien entendu, il est possible d'apporter à l'invention de nombreuses modifications sans pour autant sortir du cadre de celle-ci.

## Revendications

1. Procédé de pilotage automatique d'une commande réalisée au sein d'une plateforme de distribution, notamment de produits domestiques, comprenant un entrepôt, un premier moyen d'identification d'un client venant retirer une commande préalablement passée auprès de la plateforme de distribution, au moins une piste de livraison de commandes, l'entrepôt comprenant au moins une section de préparation commande parmi une section ambiant, une section Fruits & Légumes, une section frais et une section surgelés, un espace de stockage tampon de commandes préparées associé comportant une entrée reliée à la au moins une section de préparation commande, la au moins une piste de livraison étant reliée à une sortie de l'espace de stockage tampon, et un système automatisé de cheminement de commandes depuis la au moins une section de préparation et la au moins une piste de livraison, le système automatisé de cheminement étant connecté au premier moyen d'identification d'un client, le procédé de pilotage comportant des étapes de :
a. Préparation de la commande préalablement passée auprès de la plateforme de distribution ;
b. Stockage de la commande préalablement passée ainsi préparée dans l'espace de stockage tampon ;
c. Identification du client venant retirer la commande préalablement passée via le premier moyen d'identification ;
d. Déstockage depuis l'espace de stockage tampon de la commande associée au client préalablement identifié ;
e. Redirection de la commande associée ainsi déstockée vers la au moins une piste de livraison.

2. Procédé de pilotage automatique selon la revendication 1, dans lequel, préalablement à l'étape e., le procédé de pilotage automatique comporte une étape d'identification du client venant retirer la commande préalablement passée via un deuxième moyen d'identification prévu sur la au moins une piste de livraison.

3. Procédé de pilotage automatique selon l'une des revendications 1 à 2 dans lequel, lors de l'étape a., le procédé de pilotage automatique comporte des sous étapes de :
a1. Ventilation de la commande préalablement passée en une série de sous-commandes par type de produits contenu dans ladite commande préalablement passée ;
a2. Préparation de la série de sous commandes ainsi ventilé ; et,
a3. Envoi de la série de sous commandes ainsi préparée pour stockage.

4. Procédé de pilotage automatique selon la revendication 3, dans lequel lors de l'étape a2., le procédé de pilotage automatique comprend des sous-étapes de :
a21. Assemblage d'une série de sous commandes ;
a22. Ramassage en vrac de la série de sous commandes ainsi assemblées ;
a23. Ventilation de la série de sous commandes ainsi ramasser en chacune des sous commandes de la série de sous commandes.

5. Procédé de pilotage automatique selon la revendication 1 à 4, dans lequel, lors de l'étape b., le procédé de pilotage automatique comporte une étape de détermination d'un emplacement de stockage au sein de l'espace de stockage tampon.

6. Procédé de pilotage automatique selon la revendication 5, dans lequel la détermination de l'emplacement de stockage est optimisée fonction d'une distance entre une entrée de l'espace de stockage tampon considéré et un emplacement de stockage possible et d'une distance entre l'emplacement de stockage possible et une sortie de l'espace de stockage tampon considéré.

7. Procédé de pilotage automatique selon l'une des revendications 1 à 6, dans lequel l'identification du client est réalisée par la lecture d'une carte, d'un code barre ou QR code.

8. Procédé de pilotage automatique selon l'une des revendications 1 à 7, dans lequel le déstockage depuis l'espace de stockage tampon de l'étape d s'effectue vers une boucle d'attente, la redirection de l'étape e s'effectuant depuis la boucle d'attente.

9. Système automatisé de cheminement de commandes pour une plateforme de distribution, **caractérisé en ce qu'**il est agencé de sorte à mettre en œuvre un procédé de pilotage automatique selon l'une des revendication 1 à 8.
